Europäisches Patentamt

(19) European Patent Office

Office européen des brevets

(11) Publication number: **0 025 255**
**B1**

## EUROPEAN PATENT SPECIFICATION

(45) Date of publication of patent specification: **19.10.83**

(21) Application number: **80300719.4**

(22) Date of filing: **07.03.80**

(51) Int. Cl.³: **A 01 N 47/24,**
**A 01 N 25/26, A 01 N 25/12**

(54) **Insecticidal or nematicidal composition, processes for the preparation thereof, and use in method for controlling insects and/or nematodes.**

(30) Priority: **08.03.79 US 18528**
**07.02.80 US 114729**

(43) Date of publication of application:
**18.03.81 Bulletin 81/11**

(45) Publication of the grant of the patent:
**19.10.83 Bulletin 83/42**

(84) Designated Contracting States:
**AT BE CH DE FR IT LU NL SE**

(56) References cited:
**GB - A - 1 015 933**
**US - A - 3 074 845**
**US - A - 3 366 539**
**US - A - 3 658 870**
**US - A - 3 740 419**

(73) Proprietor: **E.I. DU PONT DE NEMOURS AND COMPANY**
**Legal Department 1007 Market Street**
**Wilmington Delaware 19898 (US)**

(72) Inventor: **Tocker, Stanley**
**4656 Norwood Drive**
**Wilmington Delaware 19803 (US)**

(74) Representative: **Holmes, Michael John et al,**
**Frank B. Dehn & Co. Imperial House 15-19**
**Kingsway**
**London WC2B 6UZ (GB)**

Insecticidal or nematicidal composition, processes for the preparation thereof and
use in method for controlling insects and nematodes

Methyl-2-(dimethylamino)-N-[[methylaminocarbonyl]-oxy]-2-oxo-ethanimidothioate, hereafter referred to by the common name oxamyl, is extremely effective as a contact type, broad spectrum insecticide and nematicide. It is especially useful in pre-plant soil incorporation treatment. The long-term insecticidal and nematicidal performance of oxamyl is impaired by its disappearance in soil, a problem believed to be accelerated by rainfall, aeration sunlight, alkalinity and elevated temperatures. There also exist problems regarding the handling safety of oxamyl as it has high toxicity, exemplified by an $LD_{50}$ rating of 5.4 mg/kg.

It is know to use slow-release systems for applying insecticides. One problem with such systems, however, is that they normally exhibit reduced early activity. This is due to the presence of the barrier material which reduces the availability of the insecticide.

Various delayed-release pesticide formulations are, for example, described in broad terms in GB—A—1,015,933, US—A—3,074,845 and US—A—3,740,419. These prior Specifications fail to identify the parameters to be controlled in successfully formulating a delayed-release composition containing oxamyl, which is a highly water-soluble compound compared to most insecticides.

There thus exists a need for prolonging the excellent insecticidal and nematicidal activity of oxamyl without impairing its initial activity. There is also a need for improving the handling safety of oxamyl.

According to the instant invention, a controlled-release composition has been unexpectedly discovered which gradually releases oxamyl in soil and greatly increase its residual insecticidal and nematicidal activity without significantly reducing its early activity. This composition also exhibits reduced mammalian toxicity.

Thus according to one aspect of the present invention there is provided an insecticidal or nematicidal composition particles of an inert carrier, methyl 2-(dimethylamino)-N-[[methyl-aminocarbonyl]oxy] - 2 - oxo - ethanimidothioate (oxamyl) in an amount which is insecticidally or nematicidally effective against pests in the vicinity of said particles, and a barrier material, characterised in that the particles of inert carrier are either (a) impregnated with oxamyl and coated with the barrier material, which may optionally contain oxamyl, or (b) coated or impregnated with a mixture of oxamyl and the barrier material, said barrier material having a water absorption rate of no greater than 0.2% by weight, when measured for 3.175 mm (1/8″) specimen in water at 23°C (73.4°F) for 24 hours, and said composition being capable of releasing oxamyl in water at 20°C at a rate of no more than 80% in 4 hours.

The instant invention encompasses three different types of controlled-release granules. In type (1), an insert carrier is impregnated with an effective amount of oxamyl and then coated with a thin layer of a barrier material. In type (2), an inert carrier is coated or impregnated with a physical mixture of an effective amount of oxamyl and a barrier material. Whether the granule will be impregnated or coated with the mixture depends on the porosity of the carrier. Finally, in type (3), the inert carrier is impregnated with an effective amount of oxamyl and is coated with a thin layer of a barrier material which also physically contains oxamyl.

The barrier materials are generally high molecular weight materials capable of forming continuous films. The materials which are useful for the purposes of this invention are those which exhibit a water absorption rate of no greater than 0.2%. When prepared from the appropriate barrier materials, the granules of this invention should be capable of releasing oxamyl in water at 20°C at a rate of no more than 80% in four hours.

The granules of the invention are generally made from insert mineral carrier. The term inert describes a material which will not interact with the oxamyl and which is practically insoluble in water. Preferred carriers are fused attapulgite, such as "Florex LVM" made by the Floridin Company, and diatomaceous earth, such as "Celatom" MP-78, available from Eagle-Picher Industries. Other types of carriers which may be utilized include other silicas, kaolinites, attapulgites, montmorillonites, calcium carbonates, talcs, crushed brick, ground shell corncob and prophyllites. When the more porous carriers such as the diatomaceous earths are used, the granules will be impregnated with the oxamyl (types (1) and (3)) or oxamyl/barrier material mixtures (type (2)). On the other hand, when less porous carriers such as the attapulgites are used, the oxamyl and the barrier are more likely to be on or near the outside of the granule.

The amount of oxamyl present in the granules conveniently ranges between 0.1 and 20 weight percent, preferably 0.5 and 15 weight percent, and most preferably 1 and 12 percent. The final dry, controlled release granules conveniently contain 4—30% barrier material. Optionally, they may contain other desirable adjuncts, for example, stabilizers for oxamyl or the polymer such as phosphoric acid, bactericides, and various coloring agents for showing the areas treated. The granules may be regular or irregular in shape, and, in their largest linear dimension, are generally 300 to 5000 microns (50—4 mesh).

As previously mentioned, the granules of this invention should be capable of releasing oxamyl in water at 20°C at a rate of no more than 80% in four hours. For some purposes, the release rate may preferably be no more than about 25% in four hours. The release rate may be easily measured by placing the granules in water at 20°C for four hours. The amount of granules and water used should be sufficient to produce a 3.5% oxamyl solution if all the oxamyl were to be released. The amount of free oxamyl in the water phase is determined by comparing index of refraction measurements with those for known oxamyl solutions.

Barrier materials which are useful for preparing the slow-release granules of this invention are those which exhibit a water absorption rate of no greater than about 0.2% when measured according to ASTM Test D-570. This test, which is known to those skilled in the art, is described in the 1967 Book of ASTM Standards. Absorption rate figures for various barrier materials are available in the Modern Plastics Encylcopedia, 1979—80 Edition. Briefly summarized, ASTM Test D—570 is as follows:

A specimen, 3.175 mm (1/8″) thick, is dried 24 hours in an oven at 50°C, cooled in a desiccator and immediately weighed. The specimen is then immersed for 24 hours in water at 23°C (73.4°F). Upon removal, the specimen is wiped dry with a cloth and immediately weighed. Increase in weight is reported as percent gained. For materials which lose some soluble matter during immersion, the sample must be re-dried, re-weighed, and reported as "percent soluble matter lost". The percent gain in weight plus percent soluble matter lost equals percent water absorption.

Specific barrier materials which are most effective include petroleum waxes or polymers such as polystyrene, styrene copolymers with minor amounts of other comonomers, polymerized unsaturated polyester/styrene, urea/formaldehyde resins, vinylidene chloride copolymers, and polyolefins. Also useful are mixtures of the recited barrier materials, especially mixtures of petroleum waxes and polyolefins.

The polystyrenes which may be used to prepare the slow-release granules of this invention preferably have a molecular weight of about 30,000 to about 500,000, and more preferably have a molecular weight of about 150,000 to about 250,000. Many polystyrenes are available commercially, Shell 314® being especially effective as a barrier material. Also effective is a copolymer of styrene containing up to 5% of other comonomer units. The comonomers which may be used are those whose presence will not greatly increase the permeability of the polystyrene and include acrylic monomers such as methyl acrylate, butadiene and, preferably, acrylonitrile.

Unsaturated polyester/styrene systems are styrene solutions of polyesters derived from unsaturated anhydrides, such as maleic anhydride, and various glycols. These liquids are cured to complex cross-linked polymers using peroxide catalysis. Such systems are commercially available and are described in Modern Plastics Encyclopedia, 1979—80 Edition, pp. 55—58 (McGraw-Hill Publishing Co.)

The urea/formaldehyde resins useful as barrier materials in the present invention are known in the art. The ratio of urea to formaldehyde in the resin is not critical, but a ratio greater than one to one is preferred and a ratio of about two to one is more preferred.

Copolymers of vinylidene chloride are also useful barrier materials. Vinylidene chloride is itself intractable and must be copolymerized with monomers to improve its handling properties but not appreciably affect its barrier properties. Such monomers are known to those skilled in the art and include the acrylates and vinyl chloride. The comonomer content should preferably constitute no more than 10% by weight of the vinylidene chloride copolymer. Several such vinylidene chloride- based materials are available commercially. Particularly effective is Daran 220® from W. R. Grace Co.

A wide number of polyolefins are useful barrier materials. Included in this group are low-melting polyethylenes, oxidized polyethylene, or ethylene copolymers containing up to about 40% comonomer such as ethylene/vinyl acetate.

Petroleum waxes such as paraffin wax may be used alone as barrier materials or may be blended with up to about 50% of a modifier or combination of modifiers. The modifiers serve to increase the softening temperature and improve the toughness of the wax. Suitable modifiers include low molecular weight polyethylenes (e.g., Epolene C-10® or E-10® from Eastman), microcrystalline petroleum waxes, ethylene/vinyl acetate (e.g., Elvax® from Du Pont) and polyterpenes (e.g., Piccolytes® from Hercules).

The granules of this invention may be prepared by any of a number of processes. Several of these processes are generally described as follows:

a) An inert mineral carrier is first contacted with a solution of an effective amount of oxamyl. Next the solvent is removed, and the carrier is contacted with a solution or aqueous dispersion of a barrier material. Subsequent removal of the liquid medium yields the slow-release oxamyl granule. This process may be used to prepare either Type (1) or Type (3) granules.

b) An inert mineral carrier is contacted with a single solution of an effective amount of oxamyl and a barrier material. Removal of the liquid medium yields the slow-release granule. Type (2) granules are prepared in this manner.

c) An inert mineral carrier is contacted with a mixture of an effective amount of oxamyl, a polymerizable material and a polymerization catalyst. The term polymerizable material refers to the chemical unit or units which combine to form the barrier material. The mixture of oxamyl, polymerizable material and polymerization catalyst may be in solution or in an aqueous dispersion; however, in instances when the polymerizable material-catalyst mixture is itself a liquid, no additional liquid medium is required. After polymerization of the polymerization material, the liquid medium (if used) is removed to yield the oxamyl granule. Type 2 granules may be prepared in this manner.

d) An inert mineral carrier is contacted with a solution of an effective amount of oxamyl, after which the liquid medium is removed. Next, the carrier is contacted with a mixture of polymerizable material and a polymerization catalyst, optionally in solution or in an aqueous dispersion. Polymerization of the polymerizable material and removal of the optional liquid medium yields Type 1 or Type 3 granules.

e) An inert mineral carrier is contacted with a solution of an effective amount of oxamyl, after which the liquid medium is removed. Next, the carrier is contacted with molten barrier material. Cooling, which should be done quickly to avoid decomposition of oxamyl, yields a Type 1 granule.

f) An inert mineral carrier is contacted with a mixture of molten barrier material and an effective amount of oxamyl. Cooling yields a Type 2 granule.

The optimal process to use to prepare a given granule will depend on the properties of barrier material utilized and will be readily determinable by one skilled in the art. For example, polystyrenes generally melt at temperatures above the decomposition temperature of oxamyl (110°C) and, thus, cannot be applied as a melt. Granules containing polystryene or styrene copolymer as barrier material are preferably prepared according to processes (a) or (b) utilizing an organic solvent.

Granules containing unsaturated polyester/styrene copolymer or urea/formaldehyde barriers are preferably prepared according to processes (c) or (d). Urea/formaldehyde systems are applied to the carrier in an aqueous dispersion, the polymerization catalyst being any water-soluble acidic material. Such catalysts are known in the art and include citric, oxalic, sulfuric, phosphoric and toluene sulfonic acid. The unsaturated polyester/styrene systems are liquid and, thus, no additional liquid medium is needed for applying the barrier mixture to the granule. Suitable catalysts for this system include peroxide catalysts such as methylethyl ketone hydroperoxide in dimethyl phthalate.

Granules having a vinylidene chloride copolymer barrier are preferably prepared via processes (a) or (b). These polymers are usually sold as aqueous dispersions and may be applied to the granules as such.

Finally, granules with a barrier of petroleum wax or a polyolefin may be prepared according to processes (a), (b), (e) or (f). The barrier may be applied as a melt, as in processes (e) or (f), if it is sufficiently low-melting. It is also preferable, when processes (e) or (f) are used, that the barrier material be free flowing at temperatures below 130°C. When processes (a) or (b) are used, the wax or polyolefin or mixtures thereof is applied as a solution to the granule.

In processes (a) through (c), oxamyl and/or the barrier may be contacted with the carrier in the form of an aqueous dispersion or in solution. In the latter case, it is preferred that the solvent be a volatile one, that is, one which can be removed by evaporation at room temperature or up to approximately 80°C, or at any temperature below the decomposition temperature of the oxamyl.

Suitable solbents for oxamyl for use in processes (a), (d) and (e) include water, acetone, methanol or mixtures thereof, and the halogenated alkanes. The preferred halogenated alkanes are those wherein the alkyl grouping is about $C_1$—$C_2$ and the halide is chlorine, such as methylene chloride.

Suitable solvents or dispersing media for the barrier material in process (a) and the polymerizable material in process (d) would be known to one skilled in the art. When Type (1) granules are to be made, the solvent or dispersing medium for the polymer of the polymerizable material should be a poor solvent for oxamyl. An example of such a solvent is toluene. On the other hand, when Type (3) granules are to be made, the solvent or dispersing medium for the polymer or the polymerizable material should be one which solubilizes oxamyl. Water (as a dispersing medium), and the halogenated alkanes, especially methylene chloride (as a solvent), fit this description. Also useful in the latter instance would be a mixture of solvents, e.g., methylene chloride plus toluene.

In processes (b) and (c), a solvent or solvent mixture must be chosen in which both the oxamyl and the polymer or polymerizable material and catalyst are soluble. Again, the preferred solvents are the halogenated alkanes, especially methylene chloride.

One skilled in the art would know how to carry out the steps recited in the description of processes (a) through (f). A preferred method for contacting the carrier with the oxamyl or oxamyl/barrier mixture consists of spraying the solution, aqueous dispersion or melt onto granules which are being mechanically tumbled in a ribbon blender or rotating mixer. Alternatively, the solution, dispersion or melt may be applied to granules which are agitated in an air stream using conventional fluidized bed equipment.

The following examples illustrate different methods for preparing the compositions of the instant invention. All parts are by weight. The products of Examples 1—9 show moderate release rates as indicated by releasing 60%—80% of the oxamyl in 4.0 hours in water at 20°C. The products of Examples 9—13 show considerably slower release rates, under 25%, under these conditions. Slower release rates suggest longer residual activity under field conditions.

### Example 1

A solution of 0.12 g of oxamyl and 2.0 g polystyrene (Shell 314-Nat.) in 15 ml methylene chloride was added all at once to 10.0 g "Celatom" MP-78 mineral granules. The granules were hand stirred under nitrogen flow until sufficient drying occurred so as to leave the granules free flowing. The resultant granules were then air dried overnight. The product contained 1% oxamyl and 16% polymer.

### Example 2

The process of Example 1 was repeated using 1.55 g oxamyl and 4.0 g polystyrene dissolved in 15 ml methylene chloride. The product contained 10% oxamyl and 26% polymer.

### Example 3

A solution of 1.55 g of oxamyl, 3.46 g urea and 6.92 g 37% aqueous formaldehyde was prepared. The resultant solution was treated with 0.1 g aqueous 85% phosphoric acid as polymerization catalyst and immediately added to 8.0 g "Celatom" MP-78. The mixture was stirred, and the resultant product was air dried overnight. The granules contained 10% oxamyl and 38% polymer.

### Example 4

A solution of 25 g oxamyl in 100 ml warm water was gradually added to 161.2 g Florex LVM 24/48 granules with mechanical tumbling. The product was air dried overnight. This granular material had 13.4% oxamyl and was coated with various polymers as described in Examples 5—7.

### Example 5

Ten grams of the granules from Example 4 were coated with 9.1 g of 5% polystyrene in toluene as described in Example 1. The product was air dried overnight and contained 12.8% oxamyl and 4.4% polymer.

### Example 6

Ten grams of the granules from Example 4 were coated with 5.0 g of a urea/formaldehyde prepolymer solution prepared by treating a solution of 60 g aqueous 37% formaldehyde, 7.0 g triethanolamine and 15 g urea with 20 g of 85% aqueous phosphoric acid. The granules were air dried overnight and were found to contain 11.8% oxamyl and 11.5% polymer.

### Example 7

The procedure of Example 4 was repeated using 25 g oxamyl in 100 ml methylene chloride and 161.2 g "Celatom" MP-78. After air drying overnight, the product was treated with a solution of 169.4 g 5% polystyrene in toluene over a 1.0 hour period. The coated product was air dried overnight. It contained 12.8% oxamyl and 4.35% polystyrene overcoat.

### Example 8

A 6.5 g portion of Vydate L® (a liquid oxamyl formulation available from E. I. du Pont de Nemours and Company, Wilmington, Delaware) was added to 10.0 g "Celatom" MP-78 granules. The product granules were air-dried overnight and then contacted with 3.99 g of a catalyzed styrene mixture with unsaturated polyester (United States Steel MR-12190) containing 0.1 g freshly added methylethyl ketone hydroperoxide in dimethyl phthalate (Witco Quickset catalyst). The mixture was held overnight at room temperature and under nitrogen to complete the polymerization. The product contained 10% oxamyl and 25.6% polymer.

### Example 9

A 249 g portion of Vydate L® was added to 300 g "Celatom" MP-78 granules, and the solvent was then removed in a rotary evaporator. A 399 g portion of aqueous vinylidene chloride copolymer latex (Daran 220®, from W. R. Grace Co.) was then added dropwise to the granules in an air stream using a rotary tumbler. After complete drying in an air stream, the product contained 10% oxamyl and 39% vinylidene chloride copolymer.

### Example 10

2.0 g of "Celatom" MP-78 diatomite granules treated with oxamyl as in Example 8, were contacted with a solution of 0.5 g Gulfwax® paraffin wax (Gulf Oil Co.) in 2.0 ml n-hexane. The product granules were dried in an air stream and contained 10.8% oxamyl and 20% paraffin wax.

### Example 11

10.0 g of Florex LVM® 8—16 mesh granules containing 14.5% oxamyl (prepared by coating with Vydate® L and drying) were coated with a melt of 2.66 g Gulfwax® paraffin wax and 1.33 g ethylene vinyl acetate copolymer (Elvax® 210) containing about 28% vinyl acetate. The product granules contained 10.4% oxamyl and 28% polymer.

### Example 12

10.0 g of Florex LVM® attapulgite granules, 8—16 mesh, containing 12.7% oxamyl (prepared by coating with Vydate® L) were coated with a solution of 2.0 g Gulfwax® paraffin wax and 0.5 g Epolene® E—10 low molecular weight oxidized polyethylene in 4.0 g cyclohexane. The granules were then dried overnight in an air stream. The product contained 10.2% oxamyl and 20% barrier.

### Example 13

10.0 g of the Florex-oxamyl granule used in Example 12 was heated to 75°C and coated with a melt mixture of 2.63 g Gulfwax® paraffin wax and 0.87 g Epolene® E-10. After cooling to room temperature, the product granules contained 9.4% oxamyl and 26% barrier.

The granules of the instant invention were mixed into soil infested with the root knot nematode (*Meloidogyne incognita*). After four weeks, all treatments provided complete control of nematodes. The soil was reinfested, and comparative readings were taken two weeks later. The same tests were performed using control samples of technical oxamyl. The improved residual nematode control exhibited by the granules of this invention was observed through a total of eight weeks, as shown by the following table.

In tests carried out at different periods, as was the case for Tests I and II, there was some variation in nematode activity, as shown by the difference in activity of the controls in the two tests. Therefore, the performance of the controlled release granules should be evaluated by comparison with control granules used in the same test.

In a separate test designed to evaluate the early performance of the granules of Example 1, nematode control was evaluated after only two weeks in comparison with the control, at a rate of only 0.25 kg/ha rate. The performance of the product of Example 1 and the control were substantially equal, i.e., over 95% control.

Per Cent Control of Root Knot Nematode*

|  |  |  | Weeks Residual (% Control) | | | |
|---|---|---|---|---|---|---|
|  | Description of granule; prepared by the testing of: | Rate kg/ha | 4 | 6 | 8 | 10 |
| Test I | control | 5 | 100 | 70 | 50 | 0 |
|  |  | 3 | 100 | 50 | 0 | 0 |
|  | Example 1 | 5 | 100 | 100 | 100 | 50 |
|  |  | 3 | 100 | 90 | 80 | 0 |
|  | Example 2 | 5 | 100 | 100 | 85 | 50 |
|  |  | 3 | 100 | 100 | 70 | 0 |
| Test II | control | 5 | 100 | 0 | 0 |  |
|  |  | 3 | 100 | 0 | 0 |  |
|  | Example 3 | 5 | 100 | 90 | 50 |  |
|  |  | 3 | 100 | 50 | 0 |  |

\* % active basis

## Claims

1. An insecticidal or nematicidal composition comprising particles of an inert carrier, methyl 2 - (dimethylamino) - N - [[methyl-aminocarbonyl]oxy] - 2 - oxo - ethanimidothioate (oxamyl) in an amount which is insecticidally or nematicidally effective against pests in the vicinity of said particles, and a barrier material, characterised in that the particles of inert carrier are either (a) impregnated with oxamyl and coated with the barrier material, which may optionally contain oxamyl, or (b) coated or impregnated with a mixture of oxamyl and the barrier material, said barrier material having a water absorption rate of no greater than 0.2% by weight, when measured for 3.175 mm (1/8") specimen in water at 23°C (73.4°F) for 24 hours, and said composition being capable of releasing oxamyl in water at 20°C at a rate of no more than 80% in 4 hours.

2. A composition according to claim 1 characterised in that the particles of inert carrier are impregnated with an effective amount of oxamyl, said impregnated carrier being coated with the barrier material.

3. A composition according to claim 1 characterised in that the particles of inert carrier are coated or impregnated with a mixture of an effective amount of oxamyl and the barrier material.

4. A composition according to claim 1 characterised in that the particles of inert carrier are impregnated with an effective amount of oxamyl, said impregnated carrier being coated with a mixture of oxamyl and barrier material.

5. A composition according to any one of the preceding claims characterised in that the carrier is diatomaceous earth or attapulgite.

6. A composition according to any one of the preceding claims characterised in that the barrier material is selected from polystyrene, styrene copolymers containing up to 5% comonomer, polymerized unsaturated polyester/styrene, urea formaldehyde resins, vinylidene chloride copolymers containing up to 10% comonomer, petroleum waxes, polyolefins and mixtures thereof.

7. A composition according to any one of the preceding claims characterised in that it contains from 0.5 to 15% by weight of oxamyl and from 4 to 30% by weight of barrier material.

8. A process for preparing a composition according to claim 1 characterised in that, particles of an inert carrier are contacted with a solution of an effective amount of oxamyl, the solvent is removed, the carrier is contacted with a solution or aqueous dispersion of a barrier material, and the solvent or water is then removed, said barrier material having a water absorption rate of no greater than 0.2% by weight, when measured for a 3.175 mm (1/8″) specimen in water at 23°C (73.4°F) for 24 hours, to produce a composition capable of releasing oxamyl in water as 20°C at a rate of no more than 80% in 4 hours.

9. A process for preparing a composition according to claim 1 characterised in that particles of an inert carrier are contacted with a single solution of an effective amount of oxamyl and a barrier material and the solvent is then removed, said barrier material having a water absorption rate of no greater than 0.2% by weight, when measured for a 3.175 mm (1/8″) specimen in water at 23°C (73.4°F) for 24 hours, to produce a composition capable of releasing oxamyl in water at 20°C at a rate of no more than 80% in 4 hours.

10. A process according to either of claims 8 and 9 characterised in that the barrier material is selected from polystyrene, styrene copolymers containing up to 5% comonomer, vinylidene chloride, copolymer containing up to 10% comonomer, polyolefins, petroleum waxes and mixtures thereof.

11. A process for preparing a composition according to claim 1 characterised in that particles of an inert carrier are contacted with a solution of an effective amount of oxamyl, the solvent is removed, and the carrier is contacted with a mixture of a polymerizable material and a polymerization catalyst which is polymerized to form a polymer having a water absorption rate of no greater than 0.2% by weight, when measured for 3.175 mm (1/8″) specimen in water at 23°C (73.4°F) for 24 hours, to obtain a composition capable of releasing oxamyl in water at 20°C at a rate of no more than 80% in 4 hours.

12. A process for preparing a composition according to claim 1 characterised in that particles of an inert carrier are contacted with a mixture of an effective amount of oxamyl, a polymerizable material and a polymerization catalyst, said polymerizable material being capable of polymerizing to form a polymer having a water absorption rate of no greater than 0.2% by weight, when measured for a 3.175 mm (1/8″) specimen in water at 23°C (73.4°F) for 24 hours, to produce a composition capable of releasing oxamyl in water at 20°C at a rate of no more than 80% in 4 hours.

13. A process according to either of claims 11 and 12 characterised in that the polymerizable material is selected from either urea and formaldehyde or unsaturated polyester and styrene.

14. A process for preparing a composition according to claim 1 characterised in that particles of an inert carrier are contacted with a solution of an effective amount of oxamyl, the solvent is removed and the carrier is contacted with molten barrier material, said barrier material having a water absorption rate of no greater than 0.2% by weight, when measured for a 3.175 mm (1/8″) specimen in water at 23°C (73.4°F) for 24 hours, to produce a composition capable of releasing oxamyl in water at 20°C at a rate of no more than 80% in 4 hours.

15. A process for preparing a composition according to claim 1 characterised in that particles of an inert carrier are contacted with a molten mixture of an effective amount of oxamyl and a barrier material, said barrier material having a water absorption rate of no greater than 0.2% by weight, when measured for 3.175 mm (1/8″) specimen in water at 23°C (73.4°F) for 24 hours, to produce a composition capable of releasing oxamyl in water at 20°C at a rate of no more than 80% in 4 hours.

16. A process according to either of claims 14 and 15 characterised in that the barrier material is selected from paraffin wax, polyolefins and mixtures thereof.

17. A method for controlling inserts and/or nematodes in a locus susceptible to attack by inserts and/or nematodes, characterised in that an effective amount of a composition according to any one of claims 1 to 7 is applied to said locus.

## Revendications

1. Composition insecticide ou nématocide comprenant des particules d'un support inerte, du 2-(diméthylamino)-N-[(méthylaminocarbonyl)-oxy]-2-oxo-éthanimidothioate de méthyle (oxamyl) en une quantité efficace en tant qu'insecticide ou nématocide contre les parasites situés au voisinage de ces particules, et une matière formant barrière, caractérisée en ce que les particules de support inerte sont soit (a) imprégnées d'oxamyl et revêtues de la matière formant barrière, qui peut facultativement contenir de l'oxamyl, soit (b) revêtues ou imprégnées d'un mélange d'oxamyl et de la matière formant barrière, cette matière formant barrière ayant un taux d'absorption d'eau qui ne dépasse pas 0,2% en poids, lorsqu'on le mesure pour un échantillon de 3,178 mm dans de l'eau à 23°C pendant 24 heures, et la composition étant capable de libérer de l'oxamyl dans de l'eau à 20°C à un taux de 80% au maximum en 4 heures.

2. Composition selon la revendication 1, caractérisé en ce que les particules de support inerte sont imprégnées d'une quantité efficace d'oxamyl, le support imprégné étant revêtu de la matière formant barrière.

3. Composition selon la revendication 1, caractérisé en ce que les particules de support inerte sont revêtues ou imprégnées d'un mélange d'une quantité efficace d'oxamyl et de la matière formant barrière.

4. Composition selon la revendication 1, caractérisé en ce que les particules de support inerte sont imprégnées d'une quantité efficace d'oxamyl, ce support imprégné étant revêtu d'un mélange d'oxamyl et de matière formant barrière.

5. Composition selon l'une quelconque des revendications précédentes, caractérisée en ce que le support est de la terre de diatomées ou de l'attapulgite.

6. Composition selon l'une quelconque des revendications précédentes, caractérisée en ce que la matière formant barrière est choisie parmi le polystyrène, les copolymères de styrène contenant jusqu'à 5% de comonomère, les produits polyester insaturé polymérisé styrène, les résines urée/formaldéhyde, les copolymères de chlorure de vinylidène contenant jusqu'à 10% de comonomère, les cires de pétrole, les polyoléfines, et les mélanges de ceux-ci.

7. Composition selon l'une quelconque des revendications précédentes, caractérisée en ce qu'elle contient de 0,5 à 15% en poids d'oxamyl et de 4 à 30% en poids de matière formant barrière.

8. Procédé de préparation d'une composition selon la revendication 1, caractérisé en ce que l'on met en contact des particules d'un support inerte avec une solution d'une quantité efficace d'oxamyle, on élimine le solvant, on met en contact le support avec une solution ou une dispersion aqueuse d'une matière formant barrière et on élimine alors le solvant ou l'eau, la matière formant barrière ayant un taux d'absorption d'eau ne dépassant pas 0,2% en poids, lorsqu'on le mesure pour un échantillon de 3,175 mm dans de l'eau à 23°C pendant 24 heures, pour obtenir une composition capable de libérer de l'oxamyl dans l'eau à 20°C à un taux de 80% au maximum en 4 heures.

9. Procédé de préparation d'une composition selon la revendication 1, caractérisé en ce qu'on met en contact des particules d'un support inerte avec une seule solution d'une quantité efficace d'oxamyl et d'une matière formant barrière ayant un taux d'absorption d'eau ne dépassant pas 0,2% en poids, lorsqu'on le mesure pour un échantillon de 3,175 mm dans de l'eau à 23°C pendant 24 heures, pour obtenir une composition capable de libérer de l'oxamyl dans l'eau à 20°C à un taux de 80% au maximum en 4 heures.

10. Procédé selon l'une des revendications 8 et 9, caractérisé en ce que la matière formant barrière est choisie parmi le polystyrène, les copolymères de styrène contenant jusqu'à 5% de comonomère, les copolymères de chlorure de vinylidène contenant jusqu'à 10% de comonomère, les polyoléfines, les cires de pétrole, et les mélanges de ceux-ci.

11. Procédé de préparation d'une composition selon la revendication 1, caractérisé en ce qu'on met en contact des particules d'un support inerte avec une solution d'une quantité efficace d'oxamyl, on élimine le solvant, et on met le support en contact avec un mélange d'une matière polymérisable et d'un catalyseur de polymérisation que l'on polymérise pour former un polymère ayant un taux d'absorption d'eau ne dépassant pas 0,2% en poids, lorsqu'on le mesure pour un échantillon de 3,175 mm dans de l'eau à 23°C pendant 24 heures, pour obtenir une composition capable de libérer de l'oxamyl dans l'eau à 20°C à un taux de 80% au maximum en 4 heures.

12. Procédé de préparation d'une composition selon la revendication 1, caractérisé en ce qu'on met en contact des particules d'un support inerte avec un mélange d'une quantité efficace d'oxamyl, d'une matière polymérisable et d'un catalyseur de polymérisation, la matière polymérisable étant capable de polymériser pour former un polymère ayant un taux d'absorption d'eau ne dépassant pas 0,2% en poids, lorsqu'on le mesure pour un échantillon de 3,175 mm dans de l'eau à 23°C pendant 24 heures, pour obtenir une composition capable de libérer de l'oxamyl dans l'eau à 20°C un taux de 80% au maximum en 4 heures.

13. Procédé selon l'une des revendications 11 et 12, caractérisé en ce que la matière polymérisable est choisie parmi soit l'urée et le formaldéhyde, soit un poester insaturé et le styrène.

14. Procédé de préparation d'une composition selon la revendication 1, caractérisé en ce qu'on met en contact des particules d'un support inerte avec une solution d'une quantité efficace d'oxamyl, on élimine le solvant et on met en contact le support avec une matière formant barrière fondue, cette matière formant barrière ayant un taux d'absorption d'eau ne dépassant pas 0,2% en poids, lorsqu'on le mesure pour un échantillon de 3,175 mm dans de l'eau à 23°C pendant 24 heures, pour produire une composition capable de libérer de l'oxamyl dans l'eau à 20°C à un taux de 80% au maximum en 4 heures.

15. Procédé de préparation d'une composition selon la revendication 1, caractérisé en ce que l'on met en contact des particules d'un support inerte avec un mélange fondu d'une quantité efficace d'oxamyl et d'une matière formant barrière, cette matière formant barrière ayant un taux d'absorption d'eau ne dépassant pas 0,2% en poids, lorsqu'on le mesure pour un échantillon de 3,175 mm dans de l'eau à 23°C pendant 24 heures, pour produire une composition capable de libérer de l'oxamyl dans l'eau à 20°C à un taux de 80% au maximum en 4 heures.

16. Procédé selon l'une des revendications 14 et 15, caractérisé en ce que la matière formant barrière est choisie parmi la cire de paraffine, les polyoléfines, et les mélanges de celles-ci.

17. Procédé de lutte contre les insectes et/ou les nématodes dans un lieu sujet à l'attaque des insectes et/ou des nématodes, caractérisé en ce que l'on applique à ce lieu une quantité efficace d'une composition selon l'une quelconque des revendications 1 à 7.

**Patentansprüche**

1. Insektizide oder nematizide Zusammensetzung, enthaltend Teilchen eines inerten Trägers, Methyl-2-(dimethylamino)-N-[[methylaminocarbonyl]oxy]-2-oxoethanimidothioat (Oxamyl), in einer Menge, die insektizid oder nematizid wirksam gegen Schädlinge in der Nähe dieser Teilchen ist, und ein Sperrmaterial, da durch gekennzeichnet, daß die Teilchen des inerten Trägers entweder (a) mit Oxamyl imprägniert und mit dem Sperrmaterial, das gegebenenfalls Oxamyl enthalten kann, beschichtet sind, oder (b) mit einem Gemisch von Oxamyl und dem Sperrmaterial beschichtet oder imprägniert sind, wobei das Sperrmaterial eine Wasserabsorptionsrate von nicht größer als 0,2 Gew.-%, gemessen für eine 3,175 mm (1/8")-Probe in Wasser bei 23°C (73,4°F) während 24 Stunden aufweist und die Zusammensetzung geeignet ist, Oxamyl in Wasser bei 20°C in einer Rate von nicht mehr als 80% in 4 Stunden freizusetzen.

2. Zusammensetzung nach Anspruch 1, dadurch gekennzeichnet, daß die Teilchen des inerten Trägers mit einer wirksamen Menge an Oxamyl imprägniert sind, wobei der imprägnierte Träger mit dem Sperrmaterial beschichtet ist.

3. Zusammensetzung nach Anspruch 1, dadurch gekennzeichnet, daß die Teilchen des inerten Trägers mit einem Gemisch einer wirksamen Menge von Oxamyl und dem Sperrmaterial beschichtet oder imprägniert sind.

4. Zusammensetzung nach Anspruch 1, dadurch gekennzeichnet, daß die Teilchen des inerten Trägers mit einer wirksamen Menge an Oxamyl imprägniert sind, wobei der imprägnierte Träger mit einem Gemisch von Oxamyl und Sperrmaterial beschichtet ist.

5. Zusammensetzung nach einem der vorhergehenden Ansprüche, dadurch gekennzeichnet, daß der Träger Diatomeenerde oder Attapulgit ist.

6. Zusammensetzung nach einem der vorhergehenden Ansprüche, dadurch gekennzeichnet, daß das Sperrmaterial ausgewählt ist aus Polystyrol, Styrolcopolymeren, die bis zu 5% Comonomeres enthalten, polymerisiertem ungesättigtem Polyester/Styrol, Harnstoff-Formaldehyd-Harzen, Vinylidenchlorid-Copolymeren mit einem Gehalt von bis zu 10% Comonomerem, Erdölwachsen, Polyolefinen und Gemischen davon.

7. Zusammensetzung nach einem der vorhergehenden Ansprüche, dadurch gekennzeichnet, daß sie 0,5 bis 15 Gew.-% Oxamyl und 4 bis 30 Gew.-% Sperrmaterial enthält.

7. Zusammensetzung nach einem der vorhergehenden Ansprüche, dadurch gekennzeichnet, daß sie 0,5 bis 15 Gew.-% Oxamyl und 4 bis 30 Gew.-% Sperrmaterial enthält.

8. Verfahren zur Herstellung einer Zusammensetzung nach Anspruch 1, dadurch gekennzeichnet, daß Teilchen eines inerten Trägers mit einer Lösung einer wirksamen Menge von Oxamyl in Kontakt gebracht werden, das lösungsmittel verdampft wird, der Träger mit einer Lösung oder wässrigen Dispersion eines Sperrmaterials in Kontakt gebracht wird und das Lösungsmittel oder Wasser dann entfernt wird, wobei das Sperrmaterial eine Wasserabsorptionsrate von nicht größer als 0,2 Gew.-%, gemessen für eine 3,175 mm (1/8")-Probe in Wasser bei 23°C (73,4°F) während 24 Stunden, aufweist, unter Bildung einer Zusammensetzung, die geeignet ist, Oxamyl in Wasser bei 20°C in einer Rate von nicht mehr als 80% in 4 Stunden freizusetzen.

9. Verfahren zur Herstellung einer Zusammensetzung nach Anspruch 1, dadurch gekennzeichnet, daß Teilchen eines inerten Trägers mit einer einzigen Lösung einer wirksamen Menge an Oxamyl und eines Sperrmaterials in Kontakt gebracht werden und das Lösungsmittel anschließend entfernt wird, wobei das Sperrmaterial eine Wasserabsorptionsrate von nitcht größer als 0,2 Gew.-%, gemessen an einer 3,175 mm (1/8")-Probe in Wasser bei 23°C (73,4°F) während 24 Stunden aufweist, unter Bildung einer Zusammensetzung, die geeignet ist, Oxamyl in Wasser bei 20°C in einer Rate von nicht mehr als 80% in 4 Stunden freizusetzen.

10. Verfahren nach Anspruch 8 oder 9, dadurch gekennzeichnet, daß das Sperrmaterial ausgewählt wird aus Polystyrol, Styrolcopolymeren mit einem Gehalt von bis zu 5% Comonomerem, Vinylidenchlorid-Copolymerem, mit einem Gehalt von bis zu 10% Comonomerem, Polyolefinen, Erdölwachsen und Gemischen davon.

11. Verfahren zur Herstellung einer Zusammensetzung nach Anspruch 1, dadurch gekennzeichnet, daß Teilchern eines inerten Trägers mit einer Lösung einer wirksamen Menge von Oxamyl in Kontakt gebracht werden, das Lösungsmittel entfernt wird und der Träger mit einem Gemisch eines polymerisierbaren Materials und eines Polymerisationskatalysators in Kontakt gebracht wird, das unter Bildung eines Polymeren mit einer Wasserabsorptionsrate von nicht größer als 0,2 Gew.-%, gemessen für eine 3,175 mm (1/8")-Probe in Wasser bei 23°C (73,4°F) während 24 Stunden aufweist, polymerisiert wird, unter Erzielung einer Zusammensetzung, die geeignet ist, Oxamyl in Wasser bei 20°C mit einer Rate von nicht mehr als 80% in 4 Stunden freizusetzen.

12. Verfahren zur Herstellung einer Zusammensetzung nach Anspruch 1, dadurch gekennzeichnet, daß Teilchen eines inerten Trägers mit einem Gemisch einer wirksamen Menge von Oxamyl, einem polymerisierbaren Material und einem Polymerisationskatalysator in Kontakt gebracht werden, wobei das polymerisierbare Material geeignet ist zur Polymerisation unter Bildung eines Polymeren mit einer Wasserabsorptionsrate von nicht größer als 0,2 Gew.-%, gemessen an einer 3,175 mm (1/8″)-Probe in Wasser bei 23°C (73,4°F) während 24 Stunden, unter Bildung einer Zusammensetzung, die geeignet ist, Oxamyl in Wasser bei 20°C in einer Rate von nicht mehr als 80% in 4 Stunden freizusetzen.

13. Verfahren nach Anspruch 11 oder 12, dadurch gekennzeichnet, daß das polymerisierbare Material ausgewählt wird aus entweder Harnstoff oder Formaldehyd oder ungesättigtem Polyester und Styrol.

14. Verfahren zur Herstellung einer Zusammensetzung nach Anspruch 1, dadurch gekennzeichnet, daß Teilchen eines inerten Trägers mit einer Lösung einer wirksamen Menge an Oxamyl in Kontakt gebracht werden, das Lösungsmittel entfernt wird und der Träger mit geschmolzenem Sperrmaterial in Kontakt gebracht wird, wobei das Sperrmaterial eine Wasserabsorptionsrate von nicht größer als 0,2 Gew.-%, gemessen an einer 3,175 mm (1/8″)-Probe in Wasser bei 23°C (73,4°F) während 24 Stunden aufweist, unter Bildung einer Zusammensetzung, die geeignet ist, Oxamyl in Wasser bei 20°C in einer Rate von nicht mehr als 80% in 4 Stunden freizusetzen.

15. Verfahren zur Herstellung einer Zusammensetzung nach Anspruch 1, dadurch gekennzeichnet, daß Teilchen eines inerten Trägers mit einem geschmolzenen Gemisch einer wirksamen Menge an Oxamyl und eines Sperrmaterials in Kontakt gebracht werden, wobei das Sperrmaterial eine Wasserabsorptionsrate von nicht grösser als 0,2 Gew.-%, gemessen an einer 3,175 mm (1/8″)-Probe in Wasser bei 23°C (73,4°F) während 24 Stunden aufweist, unter Bildung einer Zusammensetzung, die geeignet ist, Oxamyl in Wasser bei 20°C in einer Rate von nicht mehr als 80% in 4 Stunden freizusetzen.

16. Verfahren nach Anspruch 14 oder 15, dadurch gekennzeichnet, daß das Sperrmaterial ausgewählt wird aus Paraffinwachs, Polyolefinen und Gemischen davon.

17. Verfahren zur Bekämpfung von Insekten und/oder Nematoden an einem Ort, der dem Angriff von Insekten und/oder Nematoden ausgesetzt sein kann, dadurch gekennzeichnet, daß eine wirksame Menge einer Zusammensetzung gemäß einem der Ansprüche 1 bis 7 auf diesen Ort aufgetragen wird.